(19) Europäisches Patentamt
European Patent Office
Office européen des brevets

(11) Veröffentlichungsnummer: **0 255 064 B1**

# (12) EUROPÄISCHE PATENTSCHRIFT

(45) Veröffentlichungstag der Patentschrift: **08.04.92**

(51) Int. Cl.5: **C04B 28/26**, C04B 38/02, C04B 24/42, //(C04B28/26, 22:16,24:28,24:42)

(21) Anmeldenummer: **87110757.9**

(22) Anmeldetag: **24.07.87**

## (54) Anorganisch-organische Schaumstoffe und Verfahren zu ihrer Herstellung.

(30) Priorität: **25.07.86 DE 3625278**

(43) Veröffentlichungstag der Anmeldung:
**03.02.88 Patentblatt 88/05**

(45) Bekanntmachung des Hinweises auf die Patenterteilung:
**08.04.92 Patentblatt 92/15**

(84) Benannte Vertragsstaaten:
**AT BE CH DE ES FR GB GR IT LI LU NL SE**

(56) Entgegenhaltungen:
**DE-A- 2 460 834**
**US-A- 3 629 308**
**US-A- 4 142 030**

(73) Patentinhaber: **F. Willich Berg- und Bautechnik GmbH & Co.**
**Bünnerhelfstrasse 6-8**
**W-4600 Dortmund 70(DE)**

(72) Erfinder: **Bode, Harald**
**Am langen Kamp 25**
**W-4708 Kamen(DE)**

(74) Vertreter: **Vossius & Partner**
**Siebertstrasse 4 P.O. Box 86 07 67**
**W-8000 München 86(DE)**

EP 0 255 064 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft anorganisch-organische Schaumstoffe und ein Verfahren zu ihrer Herstellung durch Umsetzung von Polyisocyanaten und wäßrigen Alkalisilikatlösungen (Wasserglas) ohne Zusatz von physikalischen Treibmitteln.

Aus der DE-A-24 60 834 ist ein nicht entflammbarer Organomineralschaum, der im wesentlichen aus dem Reaktionsprodukt von Wasserglas und einer mindestens zwei Isocyanatgruppen aufweisenden Verbindung besteht, sowie ein Verfahren zu seiner Herstellung bekannt. Bei diesem Verfahren wird eine Wasserglaslösung mit einer mindestens zwei Isocyanatgruppen aufweisenden Verbindung in Gegenwart eines oder mehrerer Katalysatoren und einer oder mehrerer flüchtiger Substanzen als Treibmittel zur Umsetzung gebracht. Als Katalysatoren werden aus der Polyurethan-Chemie als Reaktionsbeschleuniger bekannte Amine und Aminoalkohole eingesetzt, wobei das 2,4,6-Tris-(dimethylaminomethyl)-phenol bevorzugt ist. Die als "physikalische" Treibmittel dienenden flüchtigen Stoffe sind Flüssigkeiten, die während der Umsetzung des Wasserglases mit dem Isocyanat infolge der dabei auftretenden Erwärmung verdampfen. Beispiele hierfür sind Monofluortrichlormethan, Dichlordifluormethan und Trichlortrifluoräthan.

In dem aus der DE-A-24 60 834 bekannten Verfahren können als weitere Zusätze Silikonöle auf der Basis von Polysiloxanen zur Einstellung der Zellstruktur, grenzflächenaktive Stoffe, die gleichzeitig als Schaumstabilisatoren wirken, sowie flammhemmende Zusätze beigemischt werden.

Polysiloxan-Polyether-Blockcopolymere und ihre Verwendung als Schaumstabilisatoren und Zellstrukturregler in Polyurethanschäumen sind aus US-A-3,629,308 bekannt.

In dem bekannten Verfahren werden zur Herstellung von Schaumstoffen mit niedriger Rohdichte (kleiner 100 $kg/m^3$) gezielt Treibmittel, nämlich Halogenalkane, wie Trichlorfluormethan, zugesetzt, die im wesentlichen für das Aufschäumen des Reaktionsgemisches verantwortlich sind. Das bei der Umsetzung von Polyisocyanat und Wasserglas bei Einstellung eines geeigneten $NCO/Me_2O$-Verhältnisses ( >2) entstehende Kohlendioxid entweicht in dem bekannten Verfahren unkontrolliert und steht deshalb für die Schaumbildung nicht oder nur in unbedeutendem Maße zur Verfügung.

Der nach dem bekannten Verfahren erforderliche Einsatz von Halogenalkanen als physikalisches Treibmittel ist unter Umweltgesichtspunkten unerwünscht. Ferner enthalten die nach dem herkömmlichen Verfahren hergestellten Organomineralschäume in ihren geschlossenen Zellen übriges Treibmittel, das im Laufe der Zeit an die Atmosphäre abgegeben wird, was ebenfalls unerwünscht ist. Es besteht deshalb ein Bedürfnis nach einem Verfahren zur Herstellung von anorganisch-organischen Schaumstoffen, das ohne Verwendung von speziell zugesetzten Treibmitteln durchgeführt werden kann.

Der Erfindung liegt die Aufgabe zugrunde, neue anorganisch-organische Schaumstoffe, die keine Treibmittelrückstände enthalten, und ein Verfahren zu ihrer Herstellung zu schaffen, das ohne die Verwendung von zugesetzten physikalischen Treibmitteln zu geschäumten Organomineralprodukten mit definierter und reproduzierbarer Dichte führt. Diese Aufgabe wird durch den überraschenden Befund gelöst, daß es durch geeignete Formulierung des Reaktionsgemisches unter Zusatz von bestimmten hydrophoben Polysiloxan-Polyäther-Blockcopolymerisaten möglich ist, das durch die Umsetzung von Isocyanatgruppen und Wasser entstehende $CO_2$ für ein gesteuertes Aufschäumen unter Erzeugung eines Schaumstoffes nutzbar zu machen.

Gegenstand der Erfindung sind somit anorganisch-organische Schaumstoffe, erhältlich durch Umsetzung in Gegenwart eines Katalysators eines Polyisocyanats mit einer Alkalisilikatlösung in einem Molverhältnis NCO-Gruppen im Polyisocyanat zu $Me_2O$-Gruppenim Wasserglas von > 2, die **dadurch gekennzeichnet** sind, daß sie mindestens 2 Gew.-%, bezogen auf die Gesamtmasse des Schaumstoffes, und 3 bis 50 Gewichtsteile pro 100 Gewichtsteile NCO-Gruppen im Polyisocyanat, eines hydrophoben Polysiloxan-Polyäther-Blockcopolymerisates der allgemeinen Formel I enthalten,

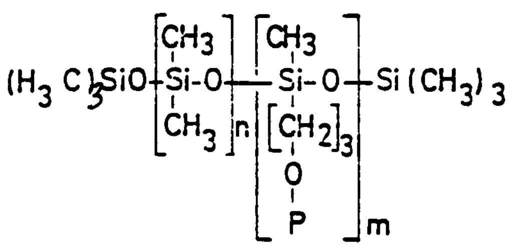

(I)

in der P einen Rest der Formel

$-(C_2H_4O)_x(C_3H_6O)_y-R$

bedeutet, wobei R ein Wasserstoffatom oder einen Alkylrest darstellt und n, m, x und y ganze Zahlen bedeuten, die den jeweiligen Polymerisationsgrad angeben, wobei der Polysiloxanblock mit dem Polyätherblock durch eine nicht hydrolysierbare SiC-Bindung verknüpft ist und der Anteil an Äthylenoxideinheiten im Polyätherblock 30 bis 80% beträgt.

Gegenstand der Erfindung ist ferner ein Verfahren zur Herstellung von anorganisch-organischen Schaumstoffen durch Umsetzung eines Polyisocyanats mit einer Alkalisilikatlösung in Gegenwart eines Katalysators, das dadurch gekennzeichnet ist, daß man die Umsetzung bei einem Molverhältnis NCO-Gruppen im Polyisocyanat zu $Me_2O$-Gruppen im Wasserglas von > 2 in Gegenwart von mindestens 2 Gew.-%, bezogen auf die Gesamtmasse des Schaumes, und von 3 bis 50 Gewichtsteilen pro 100 Gewichtsteile NCO-Gruppen im Polyisocyanat, eines hydrophoben Polysiloxanpolyäther-Blockcopolymerisates der allgemeinen Formel I durchführt.

Es wurde gefunden, daß in überraschender Weise das bei der Umsetzung von Isocyanatgruppen mit Wasser entstehende Kohlendioxid in kontroilierter Weise zum Aufschäumen des Reaktionsgemisches ausgenutzt werden kann, wenn dem Reaktionsgemisch hydrophobe Polysiloxan-Polyäther-Blockcopolymerisate zugesetzt werden. Diese Stoffe üben neben der Verbesserung der Emulgatorwirkung sowohl einen Nukleiierungseffekt für die Gasbildung, als auch eine Stabilisierung des entstehenden Schaumstoffes aus. Ihr Zusatz führt somit zu reproduzierbaren definierten Endprodukten, nämlich Organomineralschäumen schlechter Brennbarkeit. Durch den Zusatz der Polysiloxan-Polyäther-Blockcopolymerisate wird während der Reaktion der Isocyanatgruppen mit dem Wasserglas die Entstehung von $CO_2$ gefördert und gleichzeitig wird ein rasches und unkontrolliertes Entweichen des Gases aus der Reaktionsmasse verhindert.

Durch Variation der Menge der zugesetzten hydrophoben Polysiloxan-Polyäther-Blockcopolymerisate kann die Dichte der Endprodukte gezielt eingestellt werden. Voraussetzung für den Ablauf der Umsetzung in dem erfindungsgemäß gewünschten Sinn ist die Einhaltung eines Molverhältnisses von NCO-Gruppen zu $Me_2O$-Komponente im Wasserglas, das größer als 2 ist, damit berhaupt ausreichend NCO-Gruppen zur Reaktion mit dem Wasser unter $CO_2$-Bildung zur Verfügung stehen.

Die notwendigen Bestandteile des Reaktionsgemisches zur Herstellung der anorganisch-organischen Schaumstoffe mit gesteuerter Dichte nach dem Verfahren der Erfindung sind eine Wasserglaslösung, ein Polyisocyanat, ein Katalysator und ein hydrophobes Polysiloxan-Polyäther-Blockcopolymerisat.

Zur Herstellung der anorganisch-organischen Schaumstoffe der Erfindung können die auf dem Fachgebiet in üblicher Weise benutzten wäßrigen Alkalisilikatlösungen eingesetzt werden, beispielsweise die in der EP-B-579 und in der DE-A-24 60 834 beschriebenen Wasserglaslösungen. Wegen ihrer leichten Zugänglichkeit, geringen Viskosität und ihres niedrigen Preises sind Natriumwassergläser bevorzugt.

Bevorzugt eingesetzt werden Natriumwassergläser mit verhältnismäßig hohem Feststoffgehalt von 28 bis 60, insbesondere etwa 40 bis 60 Gewichtsprozent anorganische Feststoffe.

Das Molverhältnis von $SiO_2$ zum $Na_2O$ liegt günstigerweise im Bereich von 2,0 bis 4,0, insbesondere von 2,0 bis 3,2.

Falls Kaliwassergläser verwendet werden, liegt das Molverhältnis von $SiO_2$ zu $K_2O$ im Bereich von 2,8 bis 4,1, vorzugsweise von 2,8 bis 3,4. Der Feststoffgehalt des Kaliwasserglases liegt im Bereich von 28 bis 45, vorzugsweise von 35 bis 45 Gewichtsprozent.

Als Isocyanat-Komponente kommen aliphatische, cycloaliphatische, araliphatische, aromatische und heterocyclische Polyisocyanate in Betracht. Es können auch die bei der technischen Isocyanatherstellung anfallenden, Isocyanatgruppen aufweisenden Destillationsrückstände eingesetzt werden.

Geeignet sind beispielsweise die in der EP-B-579 und in der DE-A-24 60 834 genannten Verbindungen. Geeignet sind ferner auch NCO-Voraddukte, wie sie von der Herstellung von Polyurethanen bekannt und in der DE-A 24 60 834 beschrieben sind.

Aus praktischen Gründen werden die technisch leicht zugänglichen Polyisocyanate bevorzugt eingesetzt, beispielsweise das 2,3- und 2,6-Toluylendiisocyanat, sowie beliebige Gemische dieser Isomeren ("TDI"), Polyphenyl-Polymethylen-Polyisocyanate, wie sie durch Anilin-Formaldehyd-Kondensation und anschließende Phosgenierung hergestellt werden ("rohes MDI") sowie Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"). Besonders bevorzugt ist "rohes MDI" mit einem NCO-Gehalt von 28 bis 32,5 %.

Die dritte, zur Herstellung der anorganisch-organischen Schaumstoffe nach dem Verfahren der Erfindung notwendige Komponente ist ein Katalysator. Hierfür kommen die aus der Polyurethanchemie bekannten Katalysatoren in Betracht.

Beispiele für geeignete Katalysatoren sind:

Tertiäre Amine, wie Triäthylamin, Tributylamin, N-Methylmorpholin, N-Äthylmorpholin, N-Kokomorpholin, N,N,N'N'-Tetramethyläthylendiamin, 1,4-Diazabicyclo(2,2,2)octan, N-Methyl-N'-dimethylaminoäthylpiperazin, N,N-Dimethylbenzylamin, Bis-(N,N-diäthylaminoäthyl)-adipat, N,N-Diäthylbenzylamin, Pentamethyldiäthylentriamin, N,N-Dimethylcyclohexylamin, N,N,N',N'-Tetramethyl-1,3-butandiamin, N,N-Dimethyl-ß-phenyläthylamin, 1,2-Dimethylimidazol, 2-Methylimidazol und Hexahydrotriazin-Derivate;

Silaamine mit Kohlenstoff-Silicium-Bindungen, wie sie z.B. in der DE-PS 12 29 290 beschrieben sind, z.B. 2,2,4-Trimethyl-2-silamorpholinund 1,3-Diäthylaminomethyl-tetramethyldisiloxan;

stickstoffhaltige Basen, wie Tetraalkylammoniumhydroxide, Alkalimetallhydroxide, wie Natriumhydroxid, Alkalimetallphenolate, wie Natriumphenolat oder Alkalimetallalkoholate, wie Natriummethylat;

organische Metallverbindungen, insbesondere organische Zinn-verbindungen, vorzugsweise Zinn(II)-salze von Carbonsäuren, wie Zinn(II)-acetat, Zinn(II)-octoat, Zinn(II)-äthylhexoat und Zinn(II)-laurat und die Dialkylzinnsalze von Carbonsäuren, wie Dibutylzinndiacetat, Dibutylzinndilaurat, Dibutylzinnmaleat oder Dioctylzinndiacetat;

Katalysatoren, die die Additionsreaktionen und/oder die Polymerisation bzw. Trimerisation von Isocyanaten katalysieren, wie 2,4,6-Tris-(dimethylaminomethyl)-phenol.

Im erfindungsgemäßen Verfahren bevorzugt verwendete Katalysatoren sind 2,4,6-Tris-(dimethylaminomethyl)-phenol, Dimethylcyclohexylamin und Tetramethylhexamethylendiamin.

Der Katalysator wird im Verfahren der Erfindung gewöhnlich in einer Menge von etwa 0,001 bis 10, vorzugsweise 0,3 bis 4,0 Gewichtsprozent, bezogen auf die Menge des Isocyanats, eingesetzt.

Die vierte, zur Herstellung der anorganisch-organischen Schaumstoffe nach dem Verfahren der Erfindung notwendige Komponente ist ein "hydrophobes" Polysiloxan-Polyäther-Blockcopolymerisat. Die Polysiloxan-Polyäther-Blockcopolymerisate haben die allgemeine Formel I

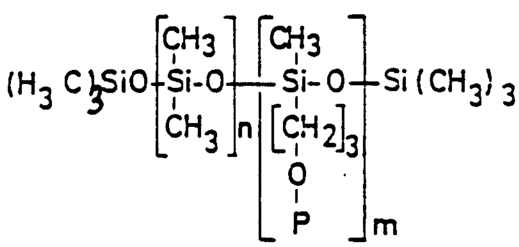

(I)

in der P einen Rest der Formel

$$-(C_2H_4O)_x(C_3H_6O)_y-R$$

darstellt, wobei R ein Wasserstoffatom oder einen Alkylrest, vorzugsweise mit 1 bis 4 Kohlenstoffatomen bedeutet und n, m, x und y ganze Zahlen sind, die den Polymerisationsgrad angeben.

Die Polysiloxan-Polyäther-Blockcopolymerisate der Formel I und ihre Verwendung als Stabilisatoren bei der Herstellung von Polyuret hanhartschäumen sind bekannt; vgl. H.J. Kollmeier u. Mitarb., "Goldschmidt informiert" Nr. 58, 1983 (Info-Blatt der Firma Goldschmidt). Bei der Polyurethanschaumherstellung werden diese Blockcopolymerisate zusammen mit einem Treibmittel eingesetzt.

Die Verknüpfung des Siloxanblocks mit dem Polyätherblock erfolgt im erfindungsgemäß eingesetzten Blockcopolymerisat durch eine nicht-hydrolysierbare Si-C-Bindung. Charakteristisch ist ferner das Verhältnis von Äthylenoxid zu Propylenoxideinheiten im Polyätherteil: Der Anteil an Äthylenoxidgruppen beträgt 30 bis 80, vorzugsweise 50 bis 70 %. Die endständige Gruppe des Polyätherblocks ist ein Wasserstoffatom oder ein Alkoxyrest, wobei der Alkoxyrest aufgrund seiner Stabilität in Isocyanaten bevorzugt ist.

Das erfindungsgemäß eingesetzte Polysiloxan-Polyäther-Blockcopolymerisat ist ein "hydrophobes" Polymerisat, wobei das Maß für den hydrophoben Charakter der Trübungspunkt einer 4prozentigen wäßrigen Lösung ist. Die erfindungsgemäß geeigneten Blockcopolymerisate weisen einen Trübungspunkt von höchstens 60° C auf. Der Trübungspunkt hängt vom Äthylenoxidgehalt des Polyätherblocks ab.

Zur Herstellung der anorganisch-orcanischen Schaumstoffe ist im Verfahren der Erfindung der Zusatz eines "physikalischen"Treibmittels zum Reaktionsgemisch nicht erforderlich. Dadurch kann der okologisch bedenkliche Einsatz von Halogenalkanen zur Herstellung der Schaumstoffe vermieden werden.

Je nach den gewünschten Eigenschaften der anorganisch-organischen Schaumstoffe können dem Reaktionsgemisch noch weitere Zusätze einverleibt werden. Hierzu gehören beispielsweise keimbildende Stoffe, nämlich fein-zerteilte Feststoffe, wie Siliciumdioxid oder Aluminiumoxid, gegebenenfalls zusammen

mit Zinkstearat, oder amorphe Kieselsäuren oder Metallsilikate. Davon wird als Keimbildner das aus der kolloidalen Wasserglaslösung ausfallende Siliciumdioxid bevorzugt.

Ferner können dem Reaktionsgemisch organische Verbindungen zugesetzt werden, die gegenüber Isocyanatgruppen reaktionsfähige Reste, insbesondere Wasserstoffatome, aufweisen. Beispiele hierfür sind Polyole, wie Polyester- und Polyätherpolyole, sowie Phosphonatester, z.B. Tri-ß-chloräthyl- oder -isopropylphosphonat, tertiäre Amine mit aktiven Wasserstoffatomen, wie Triäthanolamin, Triisopropanolamin, N-Methyl-diäthanolamin, N-Äthyl-diäthanolamin, N,N-Dimethyläthanolamin,sowie ihre Umsetzungsprodukte mit Alkylenoxiden, wie Propylenoxid und/oder Äthylenoxid (diese Stoffe können gleichzeitig als Katalysator wirken).

Zur Verminderung der Entflammbarkeit der anorganisch-organischen Schaumstoffe können im Verfahren der Erfindung dem Reaktionsgemisch flammhemmende Stoffe zugesetzt werden. Hierfür eignen sich die in der Kunststoffchemie bekannten flammhemmenden oder flammverzögernden Stoffe, wie Phosphate und Borate. Die Menge an flammhemmenden Stoffen kann im Bereich von 2 bis 30 Gewichtsprozent, bezogen auf die Isocyanatkomponente, liegen.

Der flammhemmende Zusatz dient bei maschineller Verarbeitung der Reaktionskomponenten auch zur Einstellung bestimmter $NCO/Me_2O$-Verhältnisse.

Dem Reaktionsgemisch können ferner Zuschlags- und Füllstoffe zugesetzt werden, die eine Verstärkung der Schaumstoffprodukte bewirken. Beispiele für geeignete Füllstoffe sind Diatomeenerde, Aluminiumoxidhydrat, Magnesiumsilikat, Asbestpulver, Kreide, Asbestfasern und Glasfasern. Die Menge der zugesetzten Füllstoffe richtet sich in erster Linie nach der Viskosität des Gemisches. Sie liegt vorzugsweise im Bereich von 0,1 bis 30 Gewichtsprozent, bezogen auf das Gewicht der eingesetzten Wasserglaslösung. Nach Wunsch können dem Reaktionsgemisch ferner auch Pigmente oder Farbstoffe einverleibt werden.

Zur Herstellung der anorganisch-organischen Schaumstoffe werden im Verfahren der Erfindung vorzugsweise zunächst zwei Komponenten A und B hergestellt. Die Komponente (A) besteht aus der Wasserglaslösung und enthält den Katalysator sowie gegebenenfalls als Zusätze die organischen Verbindungen mit gegenüber Isocyanatgruppen aktiven Wasserstoffatomen, wie das Polyol, sowie flammhindernde Zusätze, Füllstoffe und Farbstoffe. Der Komponente (A) kann zur Erniedrigung der Viskosität erforderlichenfalls Wasser zugefügt werden, das auch als Reaktionsteilnehmer für die Entstehung des Kohlendioxids dient.

Die Komponente (B) besteht aus dem Polyisocyanat und dem Polysiloxan-Polyäther-Blockcopolymerisat. Auch die Komponente (B) kann mit den genannten Bestandteilen verträgliche Zuschlags- und Füllstoffe sowie andere der genannten Zusätze enthalten, z.B. flammhemmende Zusätze, wie Tris-ß-chlorpropylphosphat oder ein hydrolysebeständiges Flammschutzmittel auf Phosphor/Halogen-Basis.

Zur Herstellung der anorganisch-organischen Schaumstoffe nach dem Verfahren der Erfindung werden die Komponenten (A) und (B) sorgfältig vermischt. Die Startzeit der erhaltenen Gemische liegt im allgemeinen zwischen 5 und mehr als 100 Sekunden und ist nach Wunsch steuerbar. Gegebenenfalls können die Komponenten oder das Gemisch erwärmt oder gekühlt werden, um die Startzeit den Erfordernissen anzupassen.

Falls das Gemisch mit derartiger Zusammensetzung eingestellt wird, daß das Molverhältnis NCO-Gruppen zu $Me_2O$-Gruppen im Wasserglas größer 2 ist und vorzugsweise im Bereich von etwa 2,5 bis 5 liegt, ist es möglich, das bei der Umsetzung entstehende überschüssige $CO_2$ durch den Zusatz der Polysiloxan-Polyäther-Blockcopolymerisate der allgemeinen Formel I am unkontrollierten Entweichen aus dem Reaktionsgemisch zu hindern und zur kontrollierten Aufschäumung des Gemisches und gesteuerten, reproduzierbaren Schaumbildung zu nutzen. Hierzu muß das Polysiloxan-Polyäther-Blockcopolymerisat in einer Menge von 3 bis 50, vorzugsweise 10 bis 40 Gewichtsteilen pro 100 Gewichtsteile NCO-Gruppen eingesetzt werden.

Im Verfahren der Erfindung können Organomineral-Schaumprodukte mit besonders niedriger Dichte dann erhalten werden, wenn gemäß einer bevorzugten Ausführungsform der Reaktionsmasse ein polymeres Phosphat zugesetzt wird. Zur Erzielung einer bestimmten Dichte des Organomineralschaums ist in dieser Ausführungsform überraschenderweise eine geringere Menge an Polysiloxan-Polyäther-Blockcopolymerisat erforderlich, als bei Ausführungsformen ohne Verwendung eines polymeren Phosphats, d.h. es kann ein Teil dieses Copolymerisats eingespart werden. Das polymere Phosphat wird der Reaktionsmasse in einer Menge von 20 bis 150 Gewichtsteilen, bezogen auf das Gewicht von 100 Teilen NCO-Gruppen, vorzugs weise von 60 bis 120 Gewichtsteilen zugesetzt. Ein spezielles Beispiel für ein geeignetes polymeres Phosphat ist Kaliumtripolyphosphat der Formel

$K_5P_3O_{10}$

mit einem $P_2O_5$-Anteil von 48 % und einem pH-Wert von 9,5.

Die bei Zusatz eines polymeren Phosphats erhaltenen Schäume sind feinporig, besitzen überraschend hohe Festigkeit und ähneln in ihrem Aussehen Polyurethanschäumen.

Die Organomineralschäume der Erfindung unterscheiden sich dadurch von den bekannten Produkten, die beispielsweise gemäß DE-A-24 60 834 erhalten werden, daß sie einen Anteil von vom Polysiloxanpolyäther-Blockcopolymerisat der Formel I abgeleiteten Einheiten von mindestens 2 Gewichtsprozent, bezogen auf die Gesamtmasse des Schaumes (Gesamtmenge Feststoffe, abgeleitet vom Polyisocyanat, Wasserglas, Katalysator und Blockcopolymerisat), enthalten und daß sie frei von Treibmittelrückständen (Halogenalkanen) sind.

Der Gehalt an Schaumstabilisator in den bekannten Produkten beträgt dagegen höchstens etwa 1 %. Die Obergrenze des Anteils der vom Blockcopolymerisat abgeleiteten Einheiten ist in den Schäumen der Erfindung nicht kritisch; im Hinblick auf wirtschaftliche und Verfahrensgesichtspunkte beträgt der Anteil vorzugsweise nicht mehr als 10 Gewichtsprozent, da größere Mengen des Blockcopolymerisates in dem Verfahren zur Herstellung der Schäume kaum eingesetzt werden.

Die Beispiele erläutern die Erfindung.

**Beispiel 1**

Komponente A

| | |
|---|---|
| 126,76 g | Na-Wasserglas; 45 % Feststoffe; mol $SiO_2$/mol $Na_2O$ = 2,84 |
| 3,43 g | 2,4,6-Tris-(dimethylaminomethyl)-phenol (Katalysator) |
| 22,81 g | Wasser |

Komponente B

| | |
|---|---|
| 110,7 g | "rohes MDI"; NCO-Gehalt 30,5 % |
| 12,3 g | Polysiloxanpolyätherblockcopolymerisat mit endständigen O-Methylgruppen (Tegostab B8407 der Firma Goldschmidt, BRD). |

Die beiden Komponenten (mol NCO/$Na_2O$ = 3,27) werden 15 sec bei Raumtemperatur mit einem Rührgerät innigst vermischt. 10 Es entsteht ein leichter Schaumstoff mit einem Raumgewicht von 59 kg $m^{-3}$ und einem Gehalt an Blockcopolymerisatabgeleiteten Einheiten von etwa 6,7 Gew.-%.

**Beispiel 2**

Komponente A

| | |
|---|---|
| 110,60 g | Wasserglas wie in Beispiel 1 |
| 2,50 g | Katalysator wie in Beispiel 1 |
| 52,48 g | Wasser |

Komponente B

| | |
|---|---|
| 124,00 g | "rohes MDI" wie in Beispiel 1 |
| 11,23 g | Polysiloxan-Polyäther-Blockcopolymerisat mit endständigen 0-Butylgruppen (Tegostab B 2219 der Firma Goldschmidt). |

Die Komponenten (mol NCO/$Na_2O$ = 4,20) werden wie in Beispiel 1 verarbeitet. Es entsteht ein Schaumstoff vom Raumgewicht 16 kg $m^{-3}$ und einem Gehalt an Blockcopolymerisatabgeleiteten Einheiten von etwa 6,0 Gew.-%.

**Beispiel 3**

Komponente A

| | |
|---|---|
| 107,80 g | Kaliwasserglas; Feststoffgehalt 41,1 %; $SiO_2/K_2O$ = 2,87 |
| 2,20 g | Katalysator wie in Beispiel 1 |
| 22,00 g | Wasser |

Komponente B

| | |
|---|---|
| 109,04 g | "rohes MDI" wie in Beispiel 1 |
| 6,96 g | Blockcopolymerisat wie in Beispiel 1 |

Die Komponenten werden wie in Beispiel 1 verarbeitet. Es wird ein Schaumstoff vom Raumgewicht 35 kg $m^{-3}$ und einem Gehalt an Blockcopolymerisat-abgeleiteten Einheiten von etwa 4,3 Gew.-% erhalten.

**Beispiel 4**

Komponente A

| | |
|---|---|
| 112,13 g | Natriumwasserglas 47/48; 43,3 % Feststoffe; $SiO_2/Na_2O$ = 2,69 |
| 2,29 g | Katalysator wie in Beispiel 1 |
| 22,88 g | Wasser |

Komponente B

| | |
|---|---|
| 109,04 g | "rohes MDI" wie in Beispiel 1 |
| 6,96 g | Blockcopolymerisat wie in Beispiel 1. |

Die Komponenten werden wie in Beispiel 1 verarbeitet. Es entsteht ein Schaum mit dem Raumgewicht 27 kg $m^{-3}$ und einem Gehalt an Blockcopolymerisat-abgeleiteten Einheiten von etwa 4,2 Gew.-%.

**Beispiel 5**

Komponente A

| | |
|---|---|
| 126,10 g | Natriumwasserglas 48/50 |
| 2,87 g | Katalysator wie in Beispiel 1 |
| 54,33 g | Wasser |

Komponente B

| | |
|---|---|
| 124,0 g | "rohes MDI" wie in Beispiel 1 |
| 4,3 g | Blockcopolymerisat wie in Beispiel 1 |

Die Komponenten werden wie in Beispiel 1 verarbeitet. Es entsteht ein Schaum mit dem Raumgewicht 63 kg $m^{-3}$ und einem Gehalt an Blockcopolymerisat-abgeleiteten Einheiten von etwa 2,4 Gew.-%.

**Beispiel 6**

Beispiel 5 wird mit der Änderung wiederholt, daß der Komponente B 5,3 g Blockcopolymerisat von Beispiel 1 zugefügt werden. Es wird ein Schaum mit einem Raumgewicht von 46 kg $m^{-3}$ und einem Gehalt an Blockcopolymerisat-abgeleiteten Einheiten von etwa 2,9 Gew.-% erhalten.

**Beispiel 7**

Beispiel 5 wird mit der Änderung wiederholt, daß der Komponente B 9,3 g Blockcopolymerisat von Beispiel 1 zugefügt werden. Es wird ein Schaum mit einem Raumgewicht von 33 kg $m^{-3}$ und einem Gehalt an Blockcopolymerisat-abgeleiteten Einheiten von etwa 5,0 Gew.-% erhalten.

**Beispiel 8**

Komponente A

| | |
|---|---|
| 88,33 g | Natriumwasserglas 48/50 |
| 2,69 g | Katalysator wie in Beispiel 1 |
| 33,68 g | Wasser |

Komponente B

94 g "rohes MDI" wie in Beispiel 1
6 g Blockcopolymerisat wie in Beispiel 1
20 g Flammschutzmittel auf Phosphor-Halogen-Basis
(Fyrol 2XC20 von Stauffer Chemicals).

Die Komponenten (mol $NCO/Na_2O$ = 3,58) werden wie in Beispiel 1 verarbeitet. Es wird ein feinporiger Schaumstoff vom Raumgewicht 26 kg $m^{-3}$ und einem Gehalt an Blockcopolymerisat-abgeleiteten Einheiten von etwa 4,2 Gew.-% erhalten.

**Beispiel 9**

Komponente A

64,8 g Natriumwasserglas 48/50
0,5 g Tetramethylhexamethylendiamin
22,2 g Wasser

Komponente B

57,34 g "rohes MDI" wie in Beispiel 1
3,66 g Blockcopolymerisat wie in Beispiel 1.

Die Komponenten werden wie in Beispiel 1 verarbeitet. Es wird ein Schaum mit einem Raumgewicht von 82 kg $m^{-3}$ und einem Gehalt an Blockcopolymerisat-abgeleiteten Einheiten von etwa 4,1 Gew.-% erhalten.

**Beispiel 10**

Beispiel 1 wird mit der Änderung wiederholt, daß 118,8 g "rohes MDI" und 13,2 g Blockcopolymerisat eingesetzt werden ($NCO/Na_2O$ = 3,51). Es wird ein Schaumstoff mit einem Raumgewicht von 44 kg m-$^{-3}$ und einem Gehalt an Blockcopolymerisat-abgeleiteten Einheiten von etwa 6,9 Gew.-% erhalten.

**Beispiel 11**

Komponente A

33,3 g Natriumwasserglas 54,5 % Feststoffgehalt Gewichtsverhältnis $SiO_2/Na_2O$ = 2,03
26,7 g Wasser
22 g Kaliumtripolyphosphat
8 g Natriumpolyphosphat (pH-Wert 1%ig, 8,6 ca. 60,5 % $P_2O_5$-Gehalt)
2,5 g Katalysator wie in Beispiel 1

Komponente B

95 g "rohes MDI" wie Beispiel 1
5 g Blockcopolymerisat wie Beispiel 1

Die Komponenten werden wie in Beispiel 1 verarbeitet. Es entsteht ein feinporiger, fester Schaumstoff mit dem Raumgewicht 27 kg/$m^3$

**Beispiel 12**

Komponente A

22 g Natriumwasserglas aus Beispiel 1
70 g Kaliumtripolyphosphatlösung (50%ig)
2,5 g Katalysator aus Beispiel 1
1 g Triton BG 10 (nicht ionogenes Tensid 35%ig in Wasser der Fa. Röhm & Haas).

Komponente B

95 g "rohes MDI" wie Beispiel 1
5 g Blockcopolymerisat wie Beispiel 1

Die Komponenten werden wie in Beispiel 1 verarbeitet. Es entsteht ein fester, feinporiger Schaum vom Raumgewicht 20 kg/m³.

**Beispiel 13**

Komponente A

30 g Natriumwasserglas wie Beispiel 1
40 g Kaliumtripolyphosphat 50%ige Lösung
1 g Tensid wie Beispiel 12
2,5 g Katalysator wie Beispiel 1.

Komponente B

95 g "rohes MDI" wie Beispiel 1
5 g Blockcopolymerisat wie Beispiel 1

Die Komponenten werden wie in Beispiel 1 verarbeitet. Es entsteht ein Schaum mit einem Raumgewicht von 15 kg/m³.

**Patentansprüche**

**1.** Organomineral-Schaumstoffe, erhalten durch Umsetzung in Gegenwart eines Katalysators, eines Polyisocyanats mit einer Alkalisilikatlösung in einem Molverhältnis von NCO-gruppen im Polyisocyanat zu $Me_2O$-Gruppen in der Alkalisilikatlösung von > 2, dadurch gekennzeichnet, daß sie mindestens 2 Gew-%, bezogen auf die Gesamtmasse des Schaumes, und 3 bis 50 Gewichtsteile pro 100 Gewichtsteile NCO-Gruppen im Polyisocyanat, eines hydrophoben Polysiloxan-Polyäther-Blockcopolymerisats der allgemeinen Formel I enthalten,

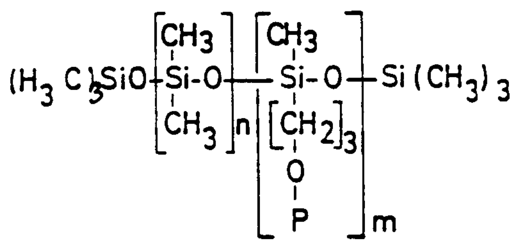

(I)

in der P einen Rest der Formel

$-(C_2H_4O)_x(C_3H_6O)_y-R$

bedeutet, wobei R ein Wasserstoffatom oder einen Alkylrest darstellt und n, m,x und y ganze Zahlen bedeuten, die den jeweiligen Polymerisationsgrad angeben, wobei der Polysiloxanblock mit dem Polyätherblock durch eine nicht hydrolysierbare SiC-Bindung verknüpft ist und der Anteil an Äthylenoxideinheiten im Polyätherblock 30 bis 80% beträgt.

**2.** Verfahren zur Herstellung von anorganisch-organischen Schaumstoffen durch Umsetzung eines Polyisocyanats mit einer Alkalisilikatlösung in Gegenwart eines Katalysators, **gekennzeichnet dadurch,** daß man die Umsetzung bei einem Molverhältnis NCO-Gruppen im Polyisocyanat zu $Me_2O$-Gruppen im Wasserglas von > 2 in Gegenwart von mindestens 2 Gew.-%, bezogen auf die Gesamtmasse des Schaumes, und von 3 bis 50 Gewichtsteilen pro 100 Gewichtsteile NCO-Gruppen im Polyisocyanat, eines hydrophoben Polysiloxan-Polyäther-Blockcopolymerisates der allgemeinen Formel

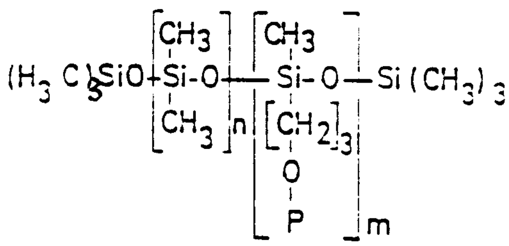

(I)

durchführt, in der P einen Rest der Formel

$-(C_2H_4O)_x(C_3H_6O)_y-R$

bedeutet, wobei R ein Wasserstoffatom oder einen Alkylrest darstellt und n, m, x und y ganze Zahlen bedeuten, die den jeweiligen Polymerisationsgrad angeben, wobei der Polysiloxanblock mit dem Polyätherblock durch eine nicht hydrolysierbare SiC-Bindung verknüpft ist und der Anteil an Äthylenoxideinheiten im Polyätherblock 30 bis 80 % beträgt.

**3.** Verfahren nach Anspruch 2, gekennzeichnet dadurch, daß man das Polyisocyanat und die Alkalisilikatlösung in derartigen Mengen einsetzt, daß das Molverhältnis $NCO/Me_2O$ im Bereich von 2,5 bis 5 liegt.

**4.** Verfahren nach Anspruch 2 oder 3, gekennzeichnet dadurch, daß man als Katalysator 2,4,6-Tris-(dimethylaminomethyl)-phenol, Dimethylcyclohexylamin oder Tetramethylhexamethylendiamin verwendet.

**5.** Verfahren nach Anspruch 2, gekennzeichnet dadurch, daß man ein hydrophobes Polysiloxan-Polyäther-Blockcopolymerisat einsetzt, das in 4prozentiger wäßriger Lösung einen Tübungspunkt von höchstens 60 ° C aufweist.

**6.** Verfahren nach Anspruch 2, gekennzeichnet dadurch, daß man die Umsetzung zwischen dem Polyisocyanat und der Alkalisilikatlösung in Gegenwart eines polymeren Phosphats durchführt.

**7.** Verfahren nach Anspruch 6, gekennzeichnet dadurch, daß man Kaliumtripolyphosphat als polymeres Phosphat verwendet.

**8.** Verfahren nach Anspruch 2 bis 7, gekennzeichnet dadurch, daß man die Umsetzung ohne Zusatz eines physikalischen Treibmittels durchführt.

## Claims

**1.** Organomineral foamed materials obtained by reacting in the presence of a catalyst, a polyisocyanate with an alkali silicate solution in a molar ratio of NCO groups in the polyisocyanate to $Me_2O$ groups in the alkali silicate solution of > 2, characterized in that they contain at least 2% by weight, based on the total mass of the material and 3 to 50 parts by weight per 100 parts by weight of NCO groups in the polyisocyanate, of a hydrophobic polysiloxane and polyether block copolymer of general formula I

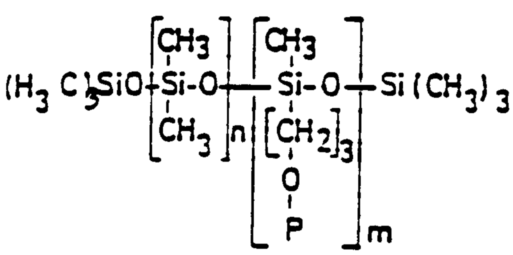

(I)

where P means a group of the formula

$-(C_2H_4O)_x(C_3H_6O)_y-R$

in which R represents a hydrogen atom or an alkyl group and n, m, x and y are integers giving the respective degree of polymerization, the polysiloxane block being linked to the polyether block by a non-hydrolysable SiC bond and the proportion of ethlyene oxide units in the polyether block being 30 to 80%.

2. A process for preparing organomineral foamed materials by reacting a polyisocyanate with an alkali silicate solution in the presence of a catalyst, **characterized by** carrying out the reaction in a molar ratio of NCO groups in the polyisocyanate to $Me_2o$ groups in the water-glass of > 2 in the presence of at least 2% by weight, based on the total mass of the foamed material and 3 to 50 parts by weight per 100 parts by weight of NCO groups in the polyisocyanate, of a hydrophobic polysiloxane and polyether block copolymer of general formula I

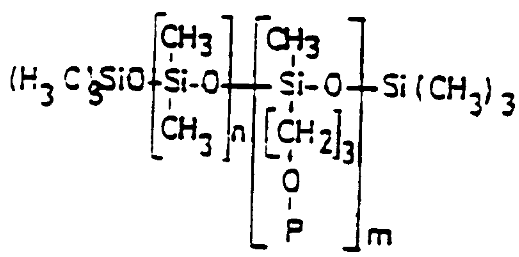

(I)

where P means a group of the formula

$-(C_2H_4O)_x(C_3H_6O)_y-R$

in which R represents a hydrogen atom or an alkyl group and n, m, x and y are integers giving the respective degree of polymerization, the polysiloxane block being linked to the polyether block by a non-hydrolysable SiC bond and the proportion of ethlyene oxide units in the polyether block being 30 to 80%.

3. The process according to Claim 2, characterized by employing the polyisocyanate and the alkali silicate solution in amounts such that the molar ratio $NCO/Me_2O$ lies in the range of 2.5 to 5.

4. The process according to Claim 2 or 3, characterized by using 2,4,6-tris(dimethylaminomethyl)phenol, dimethylcyclohexyl amine or tetramethylhexamethylene diamine as catalyst.

5. The process according to Claim 2, characterized by employing a hydrophobic polysiloxane and polyether block copolymer that exhibits a cloud point of not more than 60 ° C in 4% aqueous solution.

6. The process according to Claim 2, characterized by reacting the polyisocyanate with the alkali silicate solution in the presence of a polymeric phosphate.

7. The process according to Claim 6, characterized by using potassium tripolyphosphate as the polymeric phosphate.

8. The process according to Claims 2 to 7, characterized by carrying out the reaction without the addition of a physical foaming agent.

## Revendications

1. Mousses organominérales, obtenues par réaction, en présence d'un catalyseur, d'un polyisocyanate avec une solution de silicate de métal alcalin dans un rapport molaire entre les groupes NCO du polyisocyanate et les groupes $Me_2O$ de la solution de silicate de métal alcalin qui est supérieur à 2, caractérisées en ce qu'elles contiennent au moins 2 % en poids, par rapport à la masse globale de la mousse, et 3 à 50 parties en poids, pour 100 parties en poids de groupes NCO dans le polyisocyanate, d'un copolymère bloc de polysiloxane-polyéther hydrophobe répondant à la formule générale I

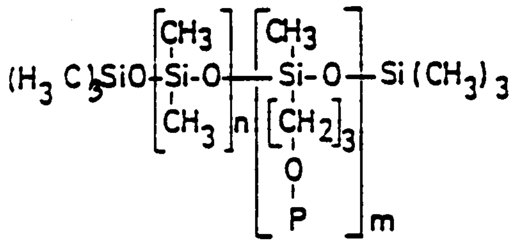

(I)

dans laquelle P représente un radical de la formule

$-(C_2H_4O)_x(C_3H_6O)_y-R$

où R représente un atome d'hydrogène ou un radical alkyle et n, m, x et y représentent des nombres entiers qui indiquent le degré de polymérisation respectif, le bloc de polysiloxane étant lié au bloc de polyéther par une liaison SiC non hydrolysable et la fraction d'unités d'oxyde d'éthylène dans le bloc de polyéther étant de 30 à 80 %.

**2.** Procédé de préparation de mousses organominérales par réaction d'un polyisocyanate avec une solution de silicate de métal alcalin en présence d'un catalyseur, caractérisé en ce que, à un rapport molaire entre les groupes NCO du polyisocyanate et les groupes $Me_2O$ du verre soluble qui est supérieur à 2, on effectue la réaction en présence d'au moins 2 % en poids, par rapport à la masse globale de la mousse, et de 3 à 50 parties en poids, pour 100 parties en poids de groupes NCO dans le polyisocyanate, d'un copolymère bloc de polysiloxane-polyéther hydrophobe répondant à la formule générale

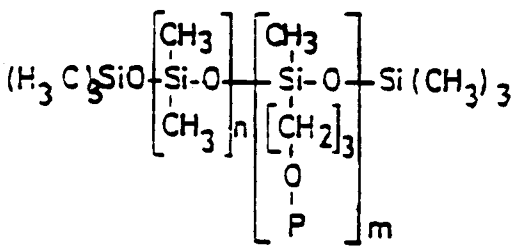

(I)

dans laquelle P représente un radical de la formule

$-(C_2H_4O)_x(C_3H_6O)_y-R$

où R représente un atome d'hydrogène ou un radical alkyle et n, m, x et y représentent des nombres entiers qui indiquent le degré de polymérisation respectif, le bloc de polysiloxane étant lié au bloc de polyéther par une liaison SiC non hydrolysable et la fraction d'unités d'oxyde d'éthylène dans le bloc de polyéther étant de 30 à 80 %.

**3.** Procédé suivant la revendication 2, caractérisé en ce qu'on met en oeuvre le polyisocyanate et la solution de silicate de métal alcalin dans des quantités telles que le rapport molaire $NCO/Me_2O$ est de l'ordre de 2,5 à 5.

**4.** Procédé suivant l'une des revendications 2 et 3, caractérisé en ce que, comme catalyseur, on utilise du 2,4,6-tris-(diméthylaminométhyl)-phénol, de la diméthylcyclohexylamine ou de la tétraméthylhexaméthylènediamine.

**5.** Procédé suivant la revendication 2, caractérisé en ce qu'on met en oeuvre un copolymère bloc de polysiloxanepolyéther hydrophobe qui présente, dans une solution aqueuse à 4%, un poids de trouble d'au maximum 60 ° C.

**6.** Procédé suivant la revendication 2, caractérisé en ce qu'on effectue la réaction entre le polyisocyanate et la solution de silicate de métal alcalin en présence d'un phosphate polymère.

**7.** Procédé suivant la revendication 6, caractérisé en ce qu'on utilise du tripolyphosphate de potassium, comme phosphate polymère.

**8.** Procédé suivant l'une des revendications 2 à 7, caractérisé en ce qu'on effectue la réaction sans addition d'un agent moussant physique.